# FASCICULE DE BREVET EUROPEEN

(11) **EP 1 604 862 B1**
(45) Date de publication et mention de la délivrance du brevet: **01.12.2010**
(21) Numéro de dépôt: 05291217.7
(22) Date de dépôt: 07.06.2005
(51) Int. Cl.: B60N 2/30

(54) **Siège transformable pour véhicule automobile**
Umwandelbarer Fahrzeugsitz
Convertible motor vehicle seat

(30) Priorité: 09.06.2004 FR 0451143; 09.11.2004 FR 0452565
(43) Date de publication de la demande: 14.12.2005
(73) Titulaire: Heuliez CONCORD, 79140 Cerizay (FR)
(72) Inventeur: Queveau, Gérard, 79140 Le Pin (FR); Queveau, Paul, 79140 Montravers (FR); Leclerre, Frédéric, 91300 Massy (FR)
(74) Mandataire: Bioret, Ludovic

(56) Documents cités:
- WO-A-03/008230
- WO-A-03/026919
- DE-A- 10 064 793
- DE-A- 10 239 112
- GB-A- 2 380 933
- US-A1- 2002 017 797
- US-A1- 2002 067 056
- US-A1- 2004 100 114
- US-A1- 2004 100 117
- US-B1- 6 183 032
- US-B1- 6 540 295

## Description

L'invention concerne un siège transformable pour véhicule automobile pouvant prendre différentes conformations, ainsi qu'un véhicule comprenant un tel siège, et un procédé de transformation d'un tel siège.

On connaît déjà des sièges de véhicule susceptibles de prendre différentes conformations, par exemple en passant d'une conformation permettant leur utilisation en tant que siège, à une conformation escamotée permettant d'augmenter la longueur du coffre arrière.

Un siège transformable représentant l'art antérieur le plus proche est décrit dans le document GB 2 380 933 A.

L'un des problèmes à résoudre lors de la conception de tels sièges est de simplifier, pour le futur utilisateur, le passage d'une conformation à une autre.

En outre, il est souhaitable qu'un même siège puisse prendre de nombreuses conformations différentes, de sorte à être utilisable pour diverses fonctions au sein de l'habitacle du véhicule automobile. Et, notamment dans les véhicules de type monospace, il est important de pouvoir moduler à souhait l'espace intérieur selon par exemple le nombre de passagers ou le type d'objets devant être transportés.

A cet effet, et selon un premier aspect, l'invention propose un siège transformable pour véhicule automobile pouvant prendre différentes conformations telles que siège, tablette, portefeuille, plane, comprenant :
- une assise et un dossier s'étendant chacun sensiblement perpendiculairement à un plan longitudinal ;
- un support constitué de deux cadres, symétriques par rapport au plan longitudinal, ayant chacun la forme d'un quadrilatère et disposés de part et d'autre de l'assise, dans des plans sensiblement parallèles au plan longitudinal, les côtés desdits cadres étant formés d'éléments rigides, dont l'un au moins est situé dans un plan voisin de l'horizontal, l'élément rigide opposé étant situé sur l'un des côtés de l'assise, les éléments rigides étant articulés les uns aux autres par des articulations disposées à chacune de leurs extrémités sur un axe formant ainsi un ensemble de quatre axes sensiblement parallèles entre eux, de sorte que le support puisse se déformer par pivotement des éléments rigides autour des axes à la manière d'un quadrilatère déformable, les axes étant constitués, lorsque le siège transformable occupe une conformation de siège :
   - d'un premier axe reliant les éléments rigides situés à l'avant du siège aux éléments rigides sensiblement horizontaux,
   - d'un deuxième axe reliant les éléments rigides situés à l'arrière du siège aux éléments rigides sensiblement horizontaux,
   - d'un troisième axe respectivement d'un quatrième axe reliant les éléments rigides situés à l'avant du siège respectivement à l'arrière du siège aux éléments rigides situés de part et d'autre de l'assise dans lequel,
      - l'une au moins des articulations des éléments rigides est verrouillable de sorte à pouvoir verrouiller le support dans une position donnée,
      - l'assise est montée articulée et verrouillable sur ledit troisième axe,
      - un bras est disposé de part et d'autre du siège, dans des plans longitudinaux, une première extrémité du bras étant articulée et verrouillable sur ledit quatrième axe,
      - le dossier est monté sur une deuxième extrémité desdits bras, par au moins une articulation verrouillable, formant ainsi un cinquième axe sensiblement parallèle aux autres axes, de sorte qu'un déverrouillage d'une ou plusieurs des articulations verrouillables permet de placer, le support, l'assise, les bras et le dossier dans différentes positions et un verrouillage desdites une ou plusieurs articulations verrouillables permet de fixer le support, l'assise, les bras et le dossier du siège transformable dans une conformation donnée.

Dans un mode de réalisation particulier, le siège selon l'invention comprend une première tige sensiblement dans le prolongement d'au moins un desdits éléments rigides situés à l'arrière du siège, ladite tige comportant à son extrémité libre un premier pignon agencé pour coopérer avec un deuxième pignon monté sur ledit cinquième axe solidaire du dossier, un troisième pignon étant monté sur ledit troisième axe solidaire de l'assise et agencé pour coopérer avec un quatrième pignon monté à l'extrémité de l'élément rigide correspondant situé à l'avant du siège, une deuxième tige étant articulée sur le dossier du siège et sur l'élément rigide situé sur le côté correspondant de l'assise de manière à former un quadrilatère déformable avec ladite première tige.

Selon un deuxième aspect, l'invention propose un véhicule comprenant au moins un tel siège.

Selon un troisième aspect, l'invention propose un procédé de transformation d'un tel siège transformable en l'une des conformations siège, tablette, portefeuille, plane, qui comprend les étapes successives de déverrouillage d'une ou plusieurs articulations verrouillables, de repositionnement de l'assise et/ou du dossier, et de verrouillage desdites une ou plusieurs articulations verrouillables.

D'autres objets et avantages de l'invention apparaîtront au cours de la description qui suit, faite en référence aux dessins annexés dans lesquels :
- la figure 1 est une vue schématique en perspective d'un siège transformable selon l'invention, associé au plancher d'un habitacle de véhicule automobile ;
- les figures 2a à 2d représentent les étapes successives nécessaires pour faire passer un tel siège de sa conformation siège à sa conformation tablette ;
- les figures 3a à 3d représentent les étapes successives nécessaires pour faire passer un tel siège de sa conformation siège à sa conformation portefeuille ;
- les figures 4a à 4f représentent les étapes successives nécessaires pour faire passer un tel siège de sa conformation siège à sa conformation plane (figures 4d et 4e) puis à sa conformation plane effacée (figure 4f) ;
- la figure 5 est une vue schématique de côté d'un véhicule de type monospace, montrant l'intérieur de l'habitacle à l'intérieur duquel sont disposés des sièges selon l'invention dans leur conformation siège ;
- la figure 6 est une vue analogue à la figure 5, dans laquelle les sièges sont montrés en configuration plane effacée, dans le plancher du véhicule ;
- la figure 7 est une vue de côté d'un siège selon un mode de réalisation de l'invention, dans sa conformation siège ;
- la figure 8 en est une vue de dessus ;

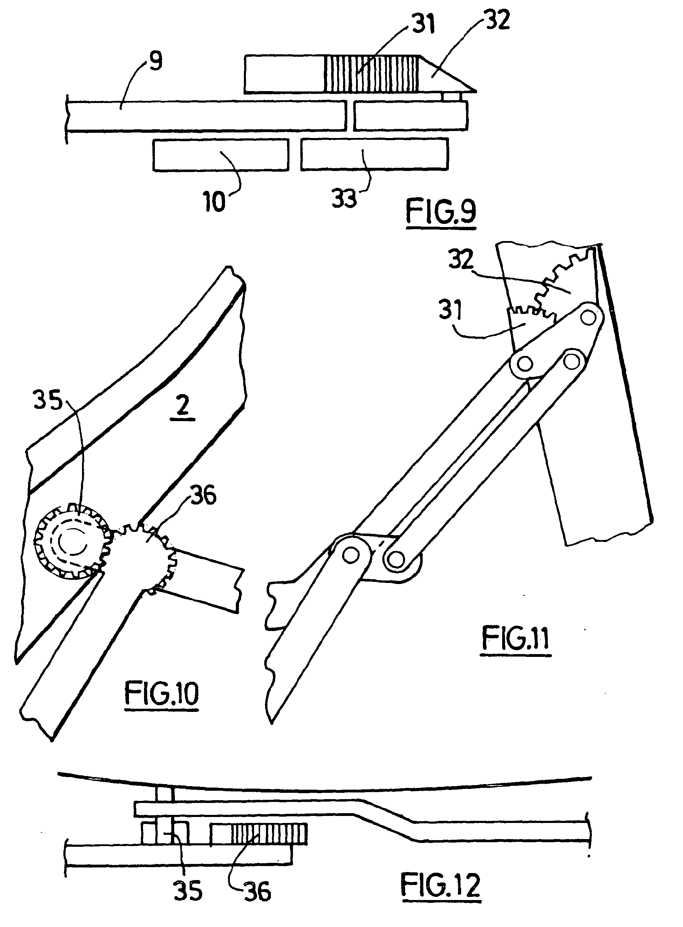

- les figures 9 à 12 en sont des vues de détail à plus grande échelle, de côté (figures 10 et 11) et de dessus (figures 9 et 12) ;
- les figures 13a, 14a et 15a sont des vues de côté du siège des figures 7 et 8 en cours de repliement et en configuration plane effacée dans le plancher du véhicule (figure 15a) ; et
- les figures 13b, 14b et 15b sont des vues de dessus correspondant aux figures 13a, 14a et 15a.

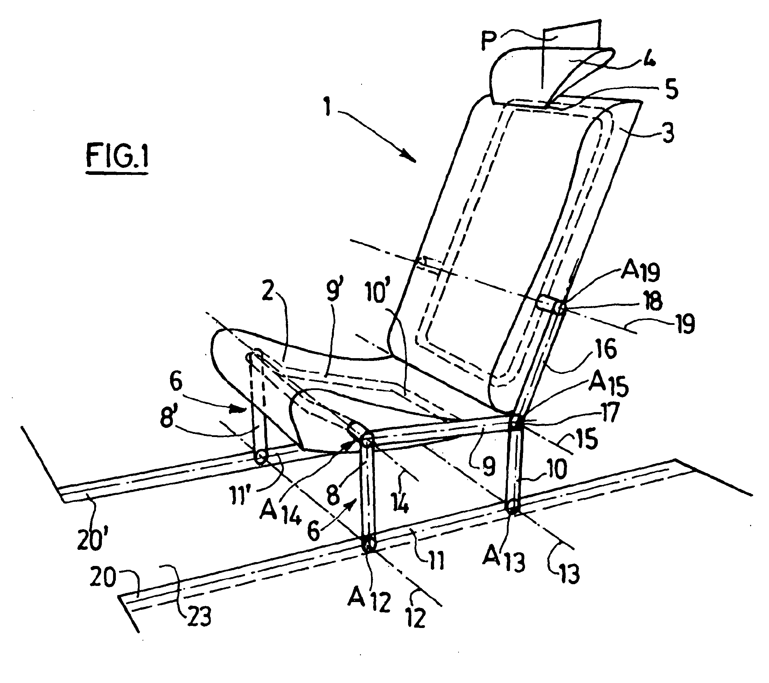

On décrit en relation avec les figures 1 à 6 un siège transformable 1 pour véhicule automobile pouvant prendre différentes conformations. Il peut être utilisé en tant que siège classique, l'assise 2 et le dossier 3 étant sensiblement perpendiculaires l'un à l'autre dans cette conformation siège. Il peut prendre également une conformation dite « tablette », permettant ainsi de déposer des objets dessus, une conformation dite « portefeuille », dans laquelle l'assise 2 est repliée sur le dossier 3, de sorte à former un ensemble s'étendant dans un plan sensiblement vertical, ou encore une configuration plane, dans laquelle l'assise 2 et le dossier 3 sont disposés dans le prolongement l'un de l'autre, et s'étendent sensiblement horizontalement.

Dans toutes ces conformations, l'assise 2 et le dossier 3 s'étendent chacun sensiblement perpendiculairement à un plan longitudinal, indiqué par la lettre P sur la figure 1.

Dans la suite de la description, on entend par « longitudinale » la direction généralement parallèle au plan de symétrie du siège, et par « transversale » la direction généralement perpendiculaire au plan de symétrie du siège, lorsque celui-ci est en conformation « siège ». En outre, on entend par «avant » et « arrière » respectivement la direction regardée par l'occupant du siège, en conformation « siège », et la direction opposée.

Le siège 1 peut comprendre, comme représenté sur les figures 1, 4, 5 et 6, un appui-tête 4 effaçable par rapport au bord supérieur du dossier 3.

Le siège 1 comprend également un support constitué de deux cadres 6 symétriques par rapport au plan longitudinal P, et disposés de part et d'autre de l'assise 2, dans des plans sensiblement parallèles au plan P. Chaque cadre 6 a une forme générale de quadrilatère, et est formé de quatre éléments rigides 8, 9, 10, 11, 8', 9', 10', 11' de type tiges, reliés les uns aux autres à leurs extrémités, l'un au moins des éléments 11, 11' étant situé dans un plan voisin de l'horizontale, l'élément rigide opposé 9, 9' étant situé sur l'un des côtés de l'assise 2.

Les éléments rigides 8, 9, 10, 11, 8', 9', 10', 11' sont articulés les uns aux autres par des articulations A12, A13, A14, A15 disposées à chacune de leurs extrémités sur un axe, formant ainsi un ensemble de quatre axes 12, 13, 14, 15 sensiblement parallèles entre eux, de sorte que le support puisse se déformer par pivotement des éléments rigides 8, 9, 10, 11, 8', 9', 10', 11' autour de ces axes à la manière d'un quadrilatère déformable, cette déformation du support contribuant à la transformation du siège en différentes conformations.

Lorsque le siège transformable 1 est dans sa conformation siège (voir en particulier la figure 1), les axes sont constitués :
- d'un premier axe 12 reliant les éléments rigides 8, 8' situés à l'avant du siège, lesdits éléments 8, 8' s'étendant sensiblement verticalement, aux éléments rigides sensiblement horizontaux 11, 11', lesdits éléments rigides sensiblement horizontaux 11, 11' étant disposés sur le plancher de l'habitacle du véhicule dans lequel le siège 1 est monté ;
- d'un deuxième axe 13 reliant les éléments rigides 10, 10' situés à l'arrière du siège, lesdits éléments 10, 10' s'étendant sensiblement verticalement, aux éléments rigides sensiblement horizontaux 11, 11' ;
- d'un troisième axe 14, respectivement d'un quatrième axe 15 reliant les éléments rigides 8, 8' situés à l'avant du siège, respectivement les éléments rigides 10, 10' à l'arrière du siège, aux éléments rigides 9, 9' situés de part et d'autre de l'assise 2, et s'étendant chacun sur un des côtés de l'assise 2, de l'avant vers l'arrière de celle-ci.

Dans ce siège 1, l'une au moins des articulations A12, A13, A14, A15, articulant les éléments rigides 8, 9, 10, 11, 8', 9', 10', 11' les uns aux autres est verrouillable, de sorte à pouvoir verrouiller le support dans une position donnée.

En outre, l'assise 2 est montée articulée et verrouillable sur le troisième axe 14 qui s'étend tranversalement, à l'avant de ladite assise 2.

Du côté du dossier 3, un bras 16 est disposé de part et d'autre du siège, chaque bras 16 étant situé dans un plan longitudinal, une première extrémité 17 du bras 16, en position inférieure dans la conformation siège de la figure 1, étant articulée et verrouillable sur le quatrième axe 15.

Le dossier 3 est quant à lui monté sur une deuxième extrémité 18 desdits bras 16, en position supérieure dans la conformation siège de la figure 1, par au moins une articulation verrouillable A19, formant ainsi un cinquième axe 19 qui s'étend transversalement, et sensiblement parallèle aux quatre autres axes 12, 13, 14, 15.

De la sorte, un déverrouillage d'une ou plusieurs des articulations verrouillables A12, A13, A14, A15, A19 permet de placer le support formé des cadres 6, l'assise 2, les bras 16 et le dossier 3 dans différentes positions, et un verrouillage desdites une ou plusieurs articulations verrouillables A12, A13, A14, A15, A19 permet de fixer ces différents éléments, à savoir le support, l'assise 2, les bras 16 et le dossier 3, dans une conformation donnée du siège transformable.

Une telle structure présente l'avantage d'être simple et d'assemblage aisé, tous les axes étant parallèles entre eux, et les éléments rigides étant situés symétriquement de part et d'autre du siège.

En outre, pour réduire les coûts de fabrication d'un tel siège, on peut prévoir que des composants utilisés pour les différents éléments du siège, tels que les éléments rigides 8, 9, 10, 11, 8', 9', 10', 11' ou les articulations verrouillables A12, A13, A14, A15, A19, soient identiques.

Par ailleurs, l'utilisation d'articulations permet de contrôler précisément les jeux fonctionnels, et de supporter des contraintes mécaniques importantes, ce qui permet de garantir une précision optimale dans le positionnement de l'assise et du dossier. Ce type d'articulations peut en outre être aisément motorisable.

Tel que cela apparaît sur les figures 1, 5 et 6, les éléments rigides 11, 11' situés dans le plan horizontal peuvent être guidés dans des rails longitudinaux parallèles 20, 20', situés sur le plancher de l'habitacle du véhicule automobile, ce qui autorise le déplacement du siège transformable 1 le long desdits rails 20, 20', et ce qui permet également de prévoir qu'une au moins des articulations A12, A13 située dans le plan horizontal soit verrouillable sur le rail 20, 20' correspondant. Lesdits éléments rigides 11, 11' peuvent être intégrés dans les glissières formant rails ou être disposés à l'extérieur desdites glissières.

Cet agencement augmente encore le caractère adaptable et modulable du siège monté dans l'habitacle d'un véhicule.

Pour rigidifier le siège 1, le quatrième axe 15 comporte en outre des moyens permettant d'accrocher de façon libérable la partie arrière de l'assise 2 et la partie basse du dossier 3 audit axe 15.

Pour simplifier encore la structure du siège, on peut prévoir, concernant l'assise 2, que ladite une au moins des articulations verrouillables des éléments rigides soit confondue avec l'articulation verrouillable A14 de l'assise.

Par ailleurs, le verrouillage/déverrouillage d'au moins les articulations A15, A19 des première 17 et deuxième 18 extrémités des bras 16 peuvent être coordonnées. Ainsi, en une seule commande, on peut commander le déverrouillage de ces articulations, pour permettre le basculement du dossier jusqu'à la position souhaitée, puis commander le verrouillage pour bloquer le dossier dans cette position.

En particulier, on peut prévoir que des moyens spécifiques soient prévus pour rendre interdépendants les mouvements du dossier 3 et des bras 16. Ces moyens peuvent être de type mécaniques, ou électromécaniques, tels que par exemple chaîne, engrenage, tringlerie. De tels moyens sont donc agencés pour rendre interdépendantes la rotation du dossier 3 autour de l'axe 19 et la rotation des bras 16 autour de l'axe 15. Ainsi, de par la coordination de ces mouvements, le dossier 3 peut suivre une trajectoire donnée, cette trajectoire pouvant être adaptée aux contours de l'habitacle dans lequel le siège 1 est monté, et pouvant offrir ainsi une ergonomie de manipulation optimale.

On décrit à présent le procédé de transformation d'un tel siège transformable en différentes conformations. Ce procédé comprend de manière générale les étapes successives de déverrouillage d'une ou plusieurs des articulations verrouillables, de repositionnement de l'assise 2 et/ou du dossier 3 dans une position compatible avec la conformation souhaitée, et de verrouillage desdites une ou plusieurs articulations verrouillables.

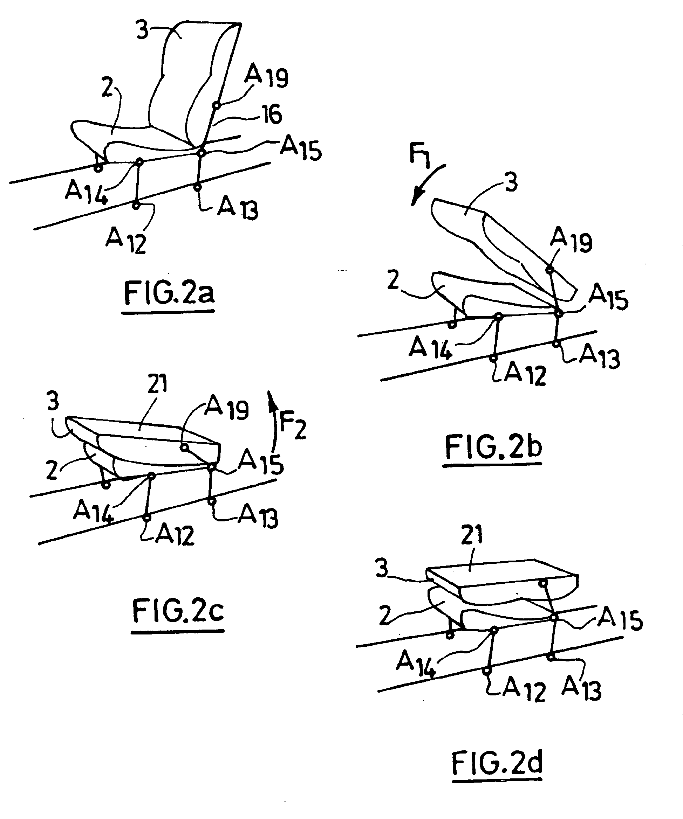

En relation avec la figure 2, on décrit le procédé de transformation du siège transformable 1 de sa conformation siège à sa conformation tablette.

La conformation siège est représentée schématiquement sur la figure 2a. A partir de cette conformation, il est tout d'abord nécessaire de déverrouiller les articulations A15, A19 situées sur les quatrième 15 et cinquième 19 axes de sorte à libérer le dossier 3 puis, comme représenté sur la figure 2b, de faire pivoter le dossier 3, respectivement les bras 16, autour des cinquième 19, respectivement quatrième 15 axe, vers l'avant du véhicule (dans le sens indiqué par la flèche F1). Le dossier 3 vient alors se positionner sur l'assise 2, la forme non plane de la face supérieure de l'assise 2 impliquant que le dossier 3 s'étende selon un certain angle par rapport à l'horizontale (voir figure 2c).

Pour parvenir à la conformation tablette, dans laquelle il est nécessaire que le dos 21 du dossier 3 soit à l'horizontale, on fait pivoter les bras 16 autour du quatrième axe 15, vers l'arrière du véhicule, ce qui permet de faire légèrement reculer le dossier 3 tout en rehaussant sa partie arrière (voir flèche F2). Ainsi, tel que représenté sur la figure 2d, le dossier 3 est alors situé sensiblement parallèlement à l'assise 2, à une certaine distance de celle-ci, le dos 21 du dossier 3 étant disposé à l'horizontale. Il est ensuite nécessaire de verrouiller les articulations A15, A19 situées sur les quatrième 15 et cinquième 19 axes, de sorte à pouvoir utiliser le siège 1 en tant que tablette.

Ainsi, pour cette transformation, il n'est pas nécessaire de modifier la position du support, ni par conséquent celle de l'assise 2 du siège.

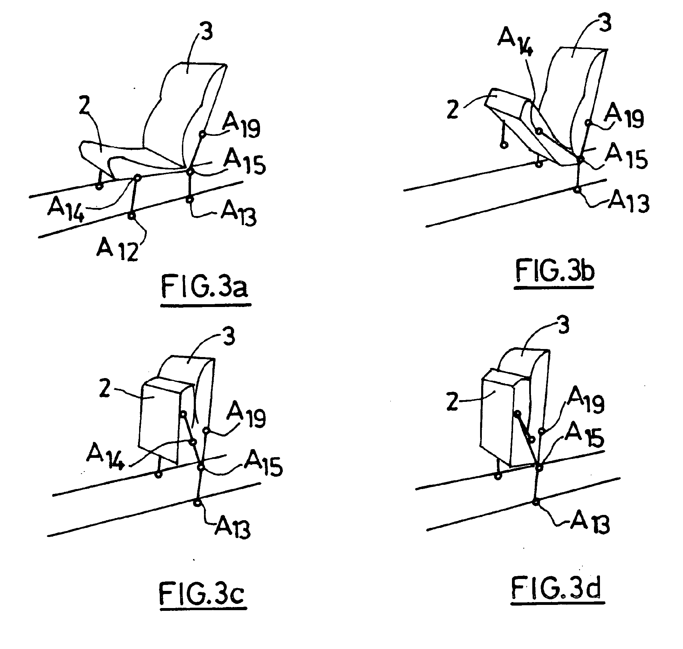

Les figures 3a à 3d représentent les étapes nécessaires pour faire passer le siège 1 de sa conformation siège (figure 3a) à sa conformation portefeuille (figure 3d). Pour ce faire, les articulations A14, A15 situées sur les troisième 14 et quatrième 15 axes sont déverrouillées, de sorte à libérer l'assise 2, puis les éléments rigides avant 8, 8' sont détachés des éléments rigides sensiblement horizontaux 11, 11' (figure 3b). Il est ainsi possible de soulever l'assise 2 vers l'arrière, en la faisant pivoter autour du quatrième axe 15, jusqu'à ce qu'elle soit disposée sensiblement verticalement, et à proximité du dossier 3 (figure 3c). On verrouille ensuite les articulations A14 et A15 situées respectivement sur les troisième 14 et quatrième 15 axe, de sorte à parvenir à la conformation portefeuille représentée sur la figure 3d, cette conformation permettant d'obtenir un gain de place évident dans l'habitacle du véhicule automobile.

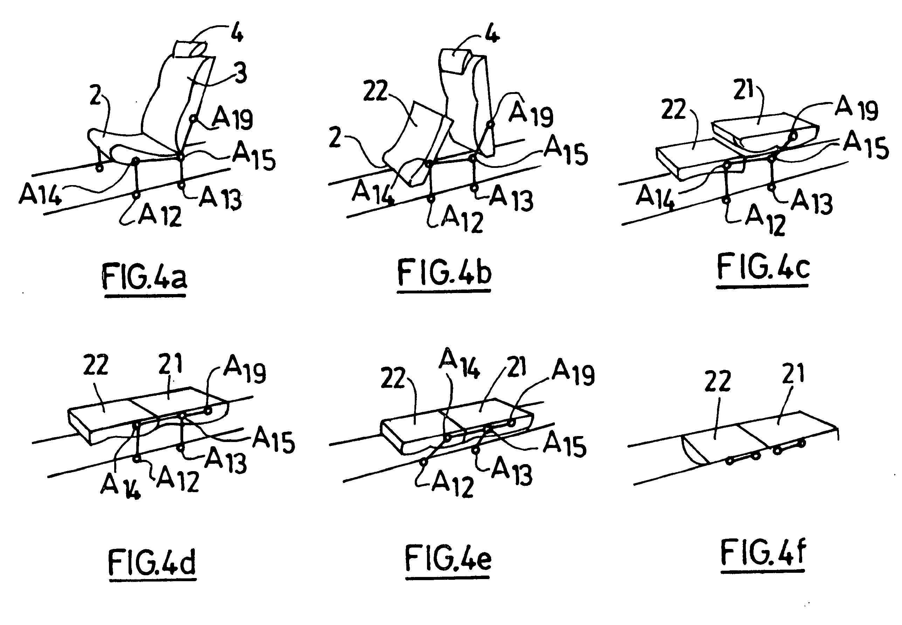

Les figures 4a à 4f représentent les étapes nécessaires pour faire passer le siège 1 d'une conformation siège (figure 4a) à une conformation plane effacée (figure 4f), cette transformation impliquant au préalable le passage dans la conformation plane (figure 4d).

A cet effet, les articulations A14, A15 situées respectivement sur les troisième 14 et quatrième 15 axes sont déverrouillées, puis on fait pivoter l'assise 2 de 180° vers l'avant du véhicule, autour du troisième axe 14 (figure 4b). Ainsi, la face inférieure 22 - ou dos - de l'assise, en conformation siège, devient la face supérieure, tout en étant maintenue en position horizontale.

Puis on procède au pivotement du dossier 3 vers l'avant, et des bras 16, autour des cinquième 19, respectivement quatrième 15 axes, de sorte que le dossier 3 vienne se positionner progressivement dans le prolongement de l'assise 2 (figure 4c). Dans le cas où le siège 1 comporte un appui-tête 4, tel que représenté, il est nécessaire de rabattre cet appui-tête 4 sur le dossier 3 préalablement au pivotement dudit dossier, afin que l'appui-tête 4 ne gêne pas le positionnement du dossier 3 par rapport à l'assise 2.

Puis, lorsque le dos 22 de l'assise 2 et le dos 21 du dossier 3 se trouvent dans un même plan horizontal (figure 4d), les articulations A14, A15, A19 situées respectivement sur les troisième 14, quatrième 15 et cinquième 19 axes sont verrouillées, de sorte à fixer le siège 1 dans sa conformation plane, ou « haute », dans laquelle les cadres 6 formant support sont déployés vers le haut.

Comme mentionné précédemment, il est alors possible de faire passer le siège 1 en position plane effacée, ou « basse », dans laquelle les cadres 6 formant support sont pliés vers le bas. Pour cela, à partir de la position plane « haute », il est nécessaire de déverrouiller l'une au moins des articulations des éléments rigides, de sorte à pouvoir déformer les cadres 6 en les pliant vers le bas, par exemple en direction de l'arrière du véhicule (figure 4e), puis, lorsque la position la plus basse est atteinte, on verrouille ladite une au moins des articulations des éléments rigides qui avait été déverrouillée au préalable.

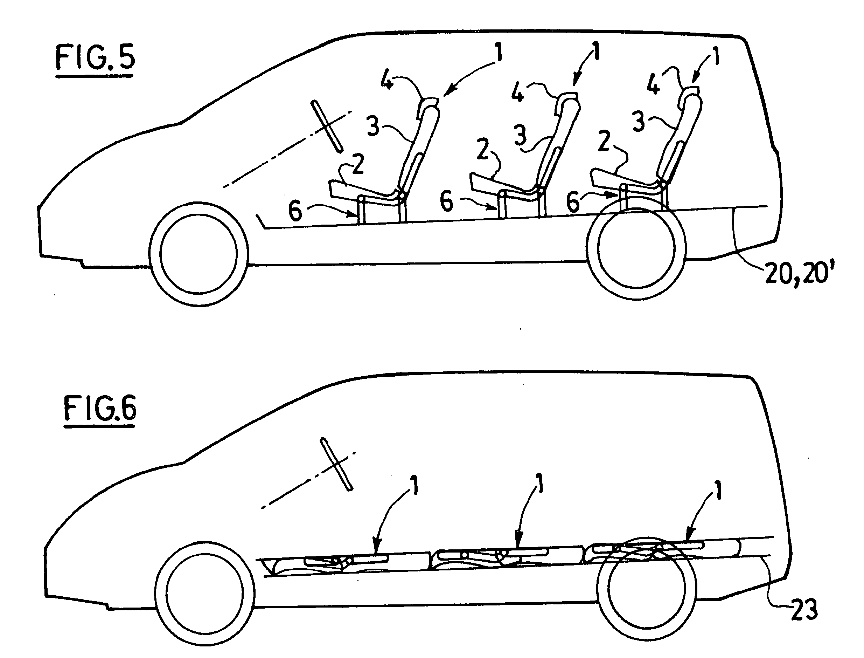

Les figures 5 et 6 montrent schématiquement un véhicule de type monospace, dans lequel sont disposés plusieurs sièges transformables 1 selon l'invention. Sur la figure 5, ils sont représentés chacun en conformation siège, et sont montés déplaçables en translation (voir double flèches) sur les rails 20 disposés sur le plancher 23 de l'habitacle. La figure 6 montre ces mêmes sièges en conformation plane effacée, et fait apparaître que, dans cette conformation, les sièges 1 sont complètement escamotés dans le plancher 23 du véhicule, de sorte que les dos 21, 22 des assises et des dossiers respectifs forment avec le plancher 23 une surface plane. Ainsi, on obtient une surface plane de plancher dans la plus grande partie de l'habitacle, ce qui permet d'utiliser l'espace de l'habitacle à des fins diverses, telles que notamment le stockage d'objets particulièrement encombrants et/ou fragiles pour lesquels un espace large et parfaitement plan est nécessaire.

Par ailleurs, on peut prévoir que l'assise 2, respectivement le dossier 3, soient réglables en inclinaison par déverrouillage puis verrouillage de l'une au moins des articulations A14, A19 situées sur les troisième 14 et cinquième 19 axes. On peut également prévoir que l'assise 2 soit réglable en hauteur par déverrouillage puis verrouillage de l'une au moins des articulations des éléments rigides. De tels agencements présentent l'avantage de regrouper sur un même axe les réglages du siège, en inclinaison et/ou en hauteur, et les commandes de changement de conformation, ce qui contribue à la simplicité de structure et d'utilisation d'un tel siège.

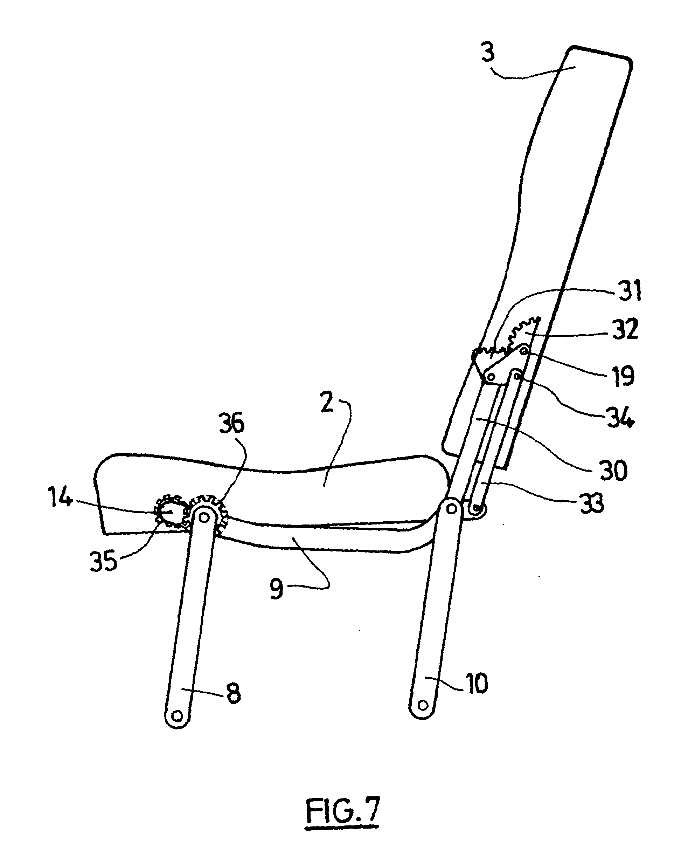

On voit à la figure 7 un mode de réalisation dans lequel une tige 30 est montée de façon verrouillable à l'extrémité et dans le prolongement de l'élément 10. Cette tige est articulée à son extrémité libre sur le dossier 3 du siège et porte à cette extrémité un pignon 31. Le pignon 31 engrène avec un pignon 32 monté solidaire du dossier sur l'axe de pivotement 19 de ce dernier.

Une autre tige 33 forme un quadrilatère déformable avec la tige 30. A cet effet, la tige 33 est articulée à une de ses extrémités sur le dossier du siège en un point 34 voisin de l'extrémité libre de la tige 30 et de l'axe 19, et à son autre extrémité sur un prolongement de l'élément 9.

Par ailleurs, l'axe 14 porte un pignon 35 solidaire de l'assise 2. Ce pignon 35 engrène avec un pignon 36 solidaire de l'élément 8 à l'extrémité de ce dernier.

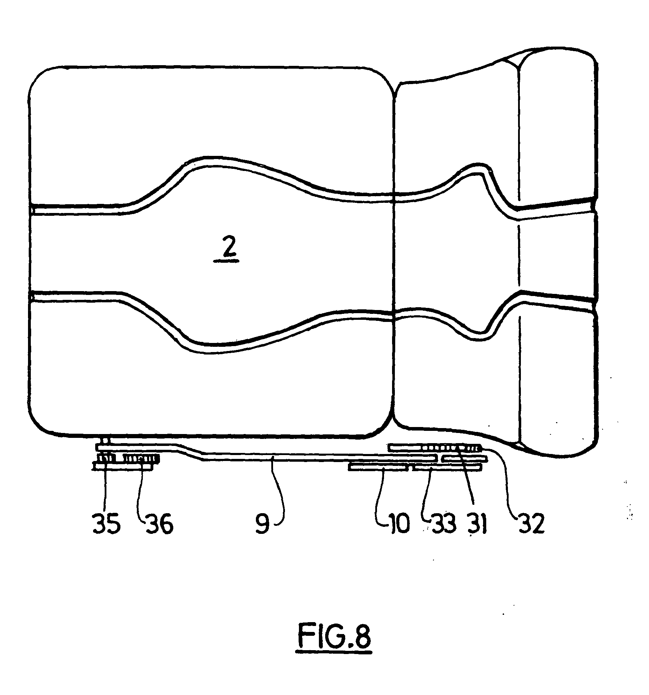

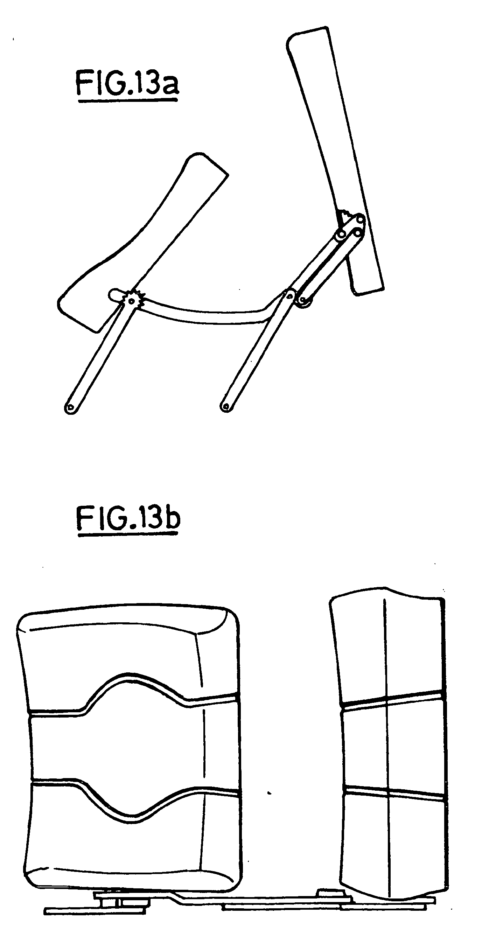

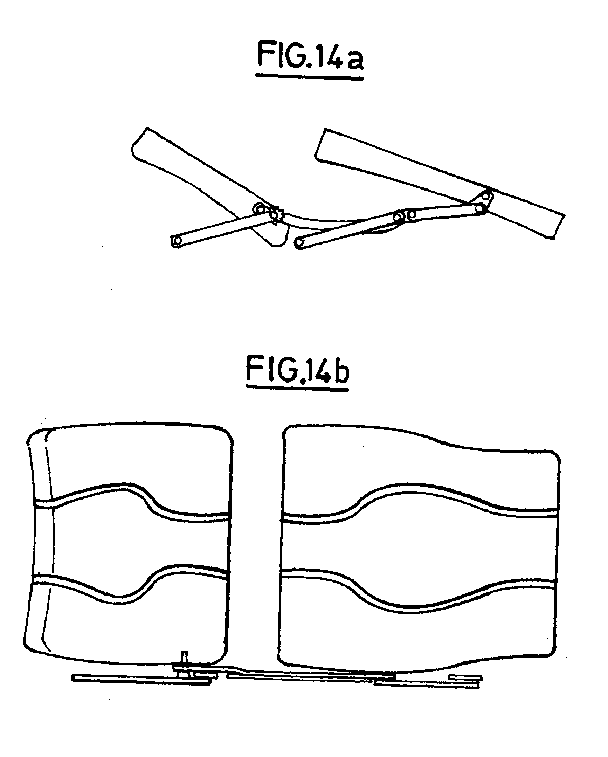

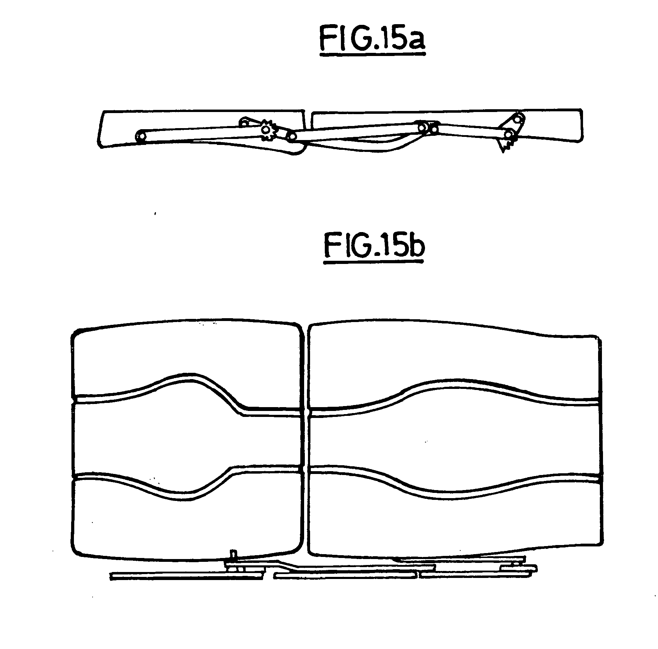

Ainsi, pour amener le siège de sa configuration des figures 7 et 8 à sa configuration escamotée des figures 15, en passant par les configurations intermédiaires des figures 13 et 14, il suffit soit de faire basculer l'assise vers le haut autour de l'axe 14, soit de faire basculer le dossier vers l'avant autour de l'axe 19. Les tiges et les pignons provoquent le basculement de l'autre élément.

## Revendications

1. Siège transformable (1) pour véhicule automobile pouvant prendre différentes conformations telles que siège, tablette, portefeuille, plane, comprenant :
- une assise (2) et un dossier (3) s'étendant chacun sensiblement perpendiculairement à un plan longitudinal (P) ;
- un support constitué de deux cadres (6), symétriques par rapport au plan longitudinal (P), ayant chacun la forme d'un quadrilatère et disposés de part et d'autre de l'assise (2), dans des plans sensiblement parallèles au plan longitudinal (P), les côtés desdits cadres étant formés d'éléments rigides (8, 9, 10, 11, 8', 9', 10', 11'), dont l'un au moins (11, 11') est situé dans un plan voisin de l'horizontal, l'élément rigide opposé (9, 9') étant situé sur l'un des côtés de l'assise (2), les éléments rigides (8, 9, 10, 11, 8', 9', 10', 11') étant articulés les uns aux autres par des articulations (A12, A13, A14, A15) disposées à chacune de leurs extrémités sur un axe (12, 13, 14, 15) formant ainsi un ensemble de quatre axes sensiblement parallèles entre eux, de sorte que le support puisse se déformer par pivotement des éléments rigides (8, 9, 10, 11, 8', 9', 10', 11') autour des axes (12, 13, 14, 15) à la manière d'un quadrilatère déformable, les axes étant constitués, lorsque le siège transformable occupe une conformation de siège :
- d'un premier axe (12) reliant les éléments rigides (8, 8') situés à l'avant du siège aux éléments rigides (11, 11') sensiblement horizontaux,
- d'un deuxième axe (13) reliant les éléments rigides (10, 10') situés à l'arrière du siège aux éléments rigides (11, 11') sensiblement horizontaux,
- d'un troisième axe (14) respectivement d'un quatrième axe (15) reliant les éléments rigides situés à l'avant du siège (8, 8') respectivement à l'arrière du siège (10, 10') aux éléments rigides situés de part et d'autre de l'assise (9, 9') dans lequel,
• l'une au moins des articulations (A12, A13, A14, A15) des éléments rigides (8, 9, 10, 11, 8', 9', 10', 11') est verrouillable de sorte à pouvoir verrouiller le support dans une position donnée,
• l'assise (2) est montée articulée et verrouillable sur ledit troisième axe (14),
• un bras (16) est disposé de part et d'autre du siège, dans des plans longitudinaux, une première extrémité (17) du bras (16) étant articulée et verrouillable sur ledit quatrième axe (15),
• le dossier (3) est monté sur une deuxième extrémité (18) desdits bras (16), par au moins une articulation verrouillable (A19), formant ainsi un cinquième axe (19) sensiblement parallèle aux autres axes (12, 13, 14, 15), de sorte qu'un déverrouillage d'une ou plusieurs des articulations verrouillables permet de placer, le support, l'assise (2), les bras (16) et le dossier (3) dans différentes positions et un verrouillage desdites une ou plusieurs articulations verrouillables permet de fixer le support, l'assise (2), les bras (16) et le dossier (3) du siège transformable dans une conformation donnée.

2. Siège transformable selon la revendication 1 **caractérisé en ce que** la conformation plane consiste en au moins deux positions :
- l'une, haute, dans laquelle les cadres (6) sont déployés vers le haut,
- l'autre, basse, dans laquelle les cadres (6) sont pliés vers le bas.

3. Siège transformable selon la revendication 1 ou 2, **caractérisé en ce que** les éléments rigides (11, 11') situés dans un plan horizontal sont guidés dans des rails (20, 20') longitudinaux parallèles, permettant le déplacement du siège transformable le long desdits rails et que l'une au moins des articulations (A12, A13) située dans ledit plan horizontal est verrouillable sur ledit rail (20, 20').

4. Siège transformable selon l'une quelconque des revendications précédentes **caractérisé en ce que** le quatrième axe (15) comporte des moyens permettant d'accrocher de façon libérable la partie arrière de l'assise (2) et la partie basse du dossier (3) audit axe (15).

5. Siège transformable selon l'une quelconque des revendications précédentes **caractérisé en ce que** ladite une au moins des articulations des éléments rigides verrouillable est confondue avec l'articulation verrouillable (A14) de l'assise (2).

6. Siège transformable selon l'une quelconque des revendications précédentes **caractérisé en ce que** le verrouillage / déverrouillage d'au moins les articulations (A15, A19) des première (17) et deuxième (18) extrémités des bras (16) sont coordonnées.

7. Siège transformable selon la revendication 6 **caractérisé en ce que** des moyens sont prévus pour rendre interdépendants les mouvements du dossier (3) et des bras (16).

8. Véhicule comprenant au moins un siège (1) selon l'une quelconque des revendications 1 à 7.

9. Procédé de transformation d'un siège transformable (1) selon l'une quelconque des revendications 1 à 7 en l'une des conformations siège, tablette, portefeuille, plane, **caractérisé en ce qu'**il comprend les étapes successives de déverrouillage d'une ou plusieurs des articulations verrouillables, de repositionnement de l'assise (2) et/ou du dossier (3), et de verrouillage desdites une ou plusieurs articulations verrouillables.

10. Procédé de transformation d'un siège transformable (1) selon l'une quelconque des revendications 1 à 7 d'une conformation siège à une conformation tablette **caractérisé en ce qu'**il consiste à :
- déverrouiller les articulations (A15, A19) situées sur les quatrième (15) et cinquième (19) axes,
- pivoter le dossier (3), respectivement les bras (16) autour des cinquième (19) respectivement quatrième (15) axes, et, lorsque le dos (21) du dossier (3) est à l'horizontale,
- verrouiller les articulations (A15, A19) situées sur les quatrième (15) et cinquième (19) axes.

11. Procédé de transformation d'un siège transformable (1) selon l'une quelconque des revendications 1 à 7 d'une conformation siège à une conformation plane **caractérisé en ce qu'**il consiste à :
- déverrouiller les articulations (A14, A15, A19) situées sur les troisième (14), quatrième (15) et cinquième (19) axes,
- pivoter l'assise (2) autour du troisième axe (14),
- pivoter le dossier (3), respectivement les bras (16) autour des cinquième (19) respectivement quatrième (15) axes et, lorsque le dos (22) de l'assise (2) et le dos (21) du dossier (3) se trouvent dans un même plan horizontal,
- verrouiller les articulations (A14, A15 ; A19) situées sur les troisième (14), quatrième (15) et cinquième (19) axes.

12. Procédé de transformation selon la revendication 11 d'un siège transformable (1) de la conformation plane à une conformation plane effacée **caractérisé en ce qu'**il consiste à :
- déverrouiller ladite une au moins des articulations (A12, A13, A14, A15) des éléments rigides,
- à plier les cadres (6) vers le bas et, lorsque la position basse est atteinte, verrouiller ladite une au moins des articulations (A12, A13, A14, A15) des éléments rigides.

13. Procédé de transformation d'un siège transformable (1) selon l'une des revendications 1 à 7 d'une conformation siège à une conformation portefeuille **caractérisé en ce qu'**il consiste à :
- déverrouiller les articulations (A14, A15) situées sur les troisième (14) et quatrième (15) axes,
- détacher les éléments rigides (8, 8') avant des éléments rigides sensiblement horizontaux (11, 11'),
- pivoter l'assise (2) jusqu'à ce qu'elle soit sensiblement verticale et à proximité du dossier (3),
- verrouiller les articulations (A14, A15) situées sur les troisième (14) et quatrième (15) axes.

14. Procédé de transformation d'un siège transformable (1) selon l'une quelconque des revendications 1 à 7 **caractérisé en ce que** l'assise (2), respectivement le dossier (3) sont réglables en inclinaison par déverrouillage puis verrouillage de l'une au moins des articulations (A14, A19) situées sur les troisième (14) et cinquième (19) axes.

15. Procédé de transformation d'un siège transformable (1) selon l'une quelconque des revendications 1 à 7 **caractérisé en ce que** l'assise (2) est réglable en hauteur par déverrouillage puis verrouillage de ladite une au moins des articulations des éléments rigides.

16. Siège transformable selon l'une quelconque des revendications 1 à 7 **caractérisé en ce qu'**il comprend une première tige (30) sensiblement dans le prolongement d'au moins un desdits éléments rigides (10, 10') situés à l'arrière du siège, ladite tige comportant à son extrémité libre un premier pignon (31) agencé pour coopérer avec un deuxième pignon (32) monté sur ledit cinquième axe (19) solidaire du dossier (3), un troisième pignon (35) étant monté sur ledit troisième axe (14) solidaire de l'assise (2) et agencé pour coopérer avec un quatrième pignon (36) monté à l'extrémité de l'élément rigide (8) correspondant situé à l'avant du siège, une deuxième tige (33) étant articulée sur le dossier du siège et sur l'élément rigide (9) situé sur le côté correspondant de l'assise de manière à former un quadrilatère déformable avec ladite première tige.

## Claims

1. Transformable seat (1) for motor vehicle that can take different configurations such as a seat, small table, portfolio, flat, comprising:
- a seat (2) and a seatback (3) each extending substantially perpendicularly to a longitudinal plane (P);
- a support comprised of two frames (6), symmetrical in relation to the longitudinal plane (P), each having the shape of a quadrilateral and arranged on either side of the seat (2), in planes that are substantially parallel to the longitudinal plane (P), the sides of said frames being formed of rigid elements (8, 9, 10, 11, 8', 9', 10', 11'), of which at least one (11, 11') is located in a plane in the vicinity of the horizontal, the opposite rigid element (9, 9') being located on one of the sides of the seat (2), the rigid elements (8, 9, 10, 11, 8', 9 ' , 10', 11') being articulated to one another via articulations (A12, A13, A14, A15) arranged at each of their ends on an axis (12, 13, 14, 15), thus forming a set of four axes substantially parallel to each other, in such a way that the support can be deformed via pivoting of the rigid elements (8, 9, 10, 11, 8' ,9' ,10' ,11') around axes (12, 13, 14, 15) in the manner of a quadrilateral that can be deformed, the axes being comprised, when the transformable seat occupies a seat configuration:
- of a first axis (12) connecting the rigid elements (8, 8') located on the front of the seat to the substantially horizontal rigid elements (11, 11 '),
- of a second axis (13) connecting the rigid elements (10, 10') located on the rear of the seat to the substantially horizontal rigid elements (11, 11'),
- of a third axis (14) respectively of a fourth axis (15) connecting the rigid elements located on the front of the seat (8, 8') respectively to the rear of the seat (10, 10') to the rigid elements located on either side of the seat (9, 9') wherein,
- at least one of the articulations (A12, A13, A14, A15) of the rigid elements (8, 9, 10, 11, 8', 9', 10', 11') can be locked in such a way as to be able to lock the support into a given position,
- the seat (2) is mounted articulated and lockable on said third axis (14),
- an arm (16) is arranged on either side of the seat, in longitudinal planes, a first end (17) of the arm (16) being articulated and lockable on said fourth axis (15),
- the seatback (3) is mounted on a second end (18) of said arms (16), by at least one articulation that can be locked (A19), thus forming a fifth axis (19) that is substantially parallel to the other axes (12, 13, 14, 15), in such a way that an unlocking of one or several of the lockable articulations makes it possible to position, the support, the seat (2), the arms (16) and the seatback (3) into different positions and a locking of said one or several lockable articulations makes it possible to fix the support, the seat (2), the arms (16) and the seatback (3) of the transformable seat in a given configuration.

2. Transformable seat according to claim 1 **characterised in that** the configuration plane consists of at least two positions:
- one, a high position, wherein the frames (6) are deployed upwards,
- the other, a low position, wherein the frames (6) are folded downwards.

3. Transformable seat according to claim 1 or 2, **characterised in that** the rigid elements (11, 11') located in a horizontal plane are guided in longitudinal parallel rails (20, 20'), enabling the displacement of the transformable seat along said rails and that at least one of the articulations (A12, A13) located in said horizontal plane can be locked onto said rail (20, 20').

4. Transformable seat according to any of the preceding claims **characterised in that** the fourth axis (15) comprises means enabling to hook in a releasable manner the rear portion of the seat (2) and the low portion of the seatback (3) to said axis (15).

5. Transformable seat according to any of the preceding claims **characterised in that** said at least one of the articulations of the lockable rigid elements is merged with the lockable articulation (A14) of the seat (2).

6. Transformable seat according to any of the preceding claims **characterised in that** the locking /unlocking of at least the articulations (A15, A19) of the first (17) and second (18) ends of the arms (16) are coordinated.

7. Transformable seat according to claim 6 **characterised in that** means are provided in order to render independent the movements of the seatback (3) and of the arms (16).

8. Vehicle comprising at least one seat (1) according to any of claims 1 to 7.

9. Method for transforming a transformable seat (1) according to any of claims 1 to 7 into one of the seat configurations, small table, portfolio, plane, **characterised in that** it comprises the successive steps of unlocking one or several of the lockable articulations, of repositioning the seat (2) and/or the seatback (3), and of locking said one or several lockable articulations.

10. Method for transforming a transformable seat (1) according to any of claims 1 to 7 from a seat configuration to a small table configuration **characterised in that** it consists in:
- unlocking the articulations (A15, A19) located on the fourth (15) and fifth (19) axes,
- pivoting the seatback (3), respectively the arms (16) around the fifth (19) respectively fourth (15) axes, and, when the back (21) of the seatback (3) is at the horizontal,
- locking the articulations (A 15, A 19) located on the fourth (15) and fifth (19) axes.

11. Method for transforming a transformable seat (1) according to any of claims 1 to 7 from a seat configuration to a flat configuration **characterised in that** it consists in:
- unlocking the articulations (A14, A15, A19) located on the third (14), fourth (15) and fifth (19) axes,
- pivoting the seat (2) around the third axis (14),
- pivoting the seatback (3), respectively the arms (16) around the fifth (19) respectively fourth (15) axes and, when the back (22) of the seat (2) and the back (21) of the seatback (3) are located on the same horizontal plane,
- locking the articulations (A14, A15; A19) located on the third (14), fourth (15) and fifth (19) axes.

12. Method for transforming according to claim 11 of a transformable seat (1) from the flat configuration to a flat receding configuration **characterised in that** it consists in:
- unlocking said at least one of the articulations (A12, A13, A14, A15) of the rigid elements,
- folding the frames (6) downwards and, when the low position is reached, locking said at least one of the articulations (A12, A13, A14, A15) of the rigid elements.

13. Method for transforming a transformable seat (1) according to one of claims 1 to 7 from a seat configuration to a portfolio configuration **characterised in that** it consists in:
- unlocking the articulations (A14, A15) located on the third (14) and fourth (15) axes,
- unfastening the front rigid elements (8, 8') of the substantially horizontal rigid elements (11, 11'),
- pivoting the seat (2) until it is substantially vertical and in the vicinity of the seatback (3),
- locking the articulations (A14, A15) located on the third (14) and fourth (15) axes.

14. Method for transforming a transformable seat (1) according to any of claims 1 to 7 **characterised in that** the seat (2), respectively the seatback (3) can be adjusted in inclination by unlocking and then locking at least one of the articulations (A14, A19) located on the third (14) and fifth (19) axes.

15. Method for transforming a transformable seat (1) according to any of claims 1 to 7 **characterised in that** the seat (2) can be adjusted in height by unlocking and then locking said at least one of the articulations of the rigid elements.

16. Transformable seat according to any of claims 1 to 7 **characterised in that** it comprises a first rod (30) substantially in the continuation of at least one of said rigid elements (10, 10') located on the rear of the seat, said rod comprising at its free end a first pinion (31) arranged in order to cooperate with a second pinion (32) mounted on said fifth axis (19) integral with the seatback (3), a third pinion (35) being mounted on said third axis (14) integral with the seat (2) and arranged in order to cooperate with a fourth pinion (36) mounted at the end of the corresponding rigid element (8) located on the front of the seat, a second rod (33) being articulated on the seatback of the seat and on the rigid element (9) located on the corresponding side of the seat in such a way as to form a deformable quadrilateral with said first rod.

## Patentansprüche

1. Umwandelbarer Sitz (1) für Kraftfahrzeuge, der verschiedene Ausbildungen, wie etwa sitzartig, tischartig, zusammengefaltet, eben, annehmen kann, umfassend:
- eine Sitzfläche (2) und eine Rückenlehne (3), die sich jeweils im Wesentlichen rechtwinklig zu einer Längsebene (P) erstrecken;
- ein Gestell, das aus zwei Rahmen (6) besteht, die zur Längsebene (P) symmetrisch sind, wobei jeder die Form eines Vierecks aufweist und auf beiden Seiten der Sitzfläche (2) in Ebenen, die zu der Längsebene (P) im Wesentlichen parallel sind, angeordnet ist, wobei die Seiten der Rahmen aus starren Elementen (8, 9, 10, 11, 8', 9', 10', 11') gebildet sind, von denen mindestens eines (11, 11') sich in einer Ebene neben der Waagerechten befindet, wobei das gegenüberliegende starre Element (9, 9') sich auf einer der Seiten der Sitzfläche (2) befindet, wobei die starren Elemente (8, 9, 10, 11, 8', 9', 10', 11') miteinander über Gelenke (A12, A13, A14, A15) angelenkt sind, die an jedem ihrer Enden auf einer Achse (12, 13, 14, 15) angeordnet sind, wodurch sie eine Einheit aus vier Achsen bilden, die im Wesentlichen zueinander parallel sind, so dass das Gestell sich durch Verschwenken der starren Elemente (8, 9, 10, 11, 8', 9', 10', 11') um die Achsen (12, 13, 14, 15) nach Art eines verformbaren Vierecks verformen kann, wobei die Achsen, wenn der umwandelbare Sitz eine sitzartige Ausbildung einnimmt, bestehen aus:
- einer ersten Achse (12), welche die starren Elemente (8, 8'), die sich vor dem Sitz befinden, mit den im Wesentlichen waagerechten starren Elementen (11, 11') verbindet,
- einer zweiten Achse (13), welche die starren Elemente (10, 10'), die sich hinter dem Sitz befinden, mit den im Wesentlichen waagerechten starren Elementen (11, 11') verbindet,
- einer dritten Achse (14) bzw. einer vierten Achse (15), welche die starren Elemente, die sich vor dem Sitz (8, 8') bzw. hinter dem Sitz (10, 10') befinden, mit den starren Elementen, die sich auf beiden Seiten der Sitzfläche (9, 9') befinden, verbindet, wobei
-- mindestens eines der Gelenke (A12, A13, A14, A15) der starren Elemente (8, 9, 10, 11, 8', 9', 10', 11') derart verriegelbar ist, dass das Gestell in einer gegebenen Position verriegelt werden kann,
-- die Sitzfläche (2) auf der dritten Achse (14) gelenkig montiert und verriegelbar ist,
-- ein Arm (16) auf beiden Seiten des Sitzes in Längsebenen angeordnet ist, wobei ein erstes Ende (17) des Arms (16) an der vierten Achse (15) angelenkt und verriegelbar ist,
-- die Rückenlehne (3) an einem zweiten Ende (18) der Arme (16) über mindestens ein verriegelbares Gelenk (A19) montiert ist, wodurch sie eine fünfte Achse (19) bildet, die zu den anderen Achsen (12, 13, 14, 15) im Wesentlichen parallel ist, so dass eine Entriegelung eines oder mehrerer der verriegelbaren Gelenke es ermöglicht, das Gestell, die Sitzfläche (2), die Arme (16) und die Rückenlehne (3) in verschiedene Positionen zu versetzen, und eine Verriegelung des einen oder der mehreren verriegelbaren Gelenke es ermöglicht, das Gestell, die Sitzfläche (2), die Arme (16) und die Rückenlehne (3) des umwandelbaren Sitzes in einer gegebenen Ausbildung zu fixieren.

2. Umwandelbarer Sitz nach Anspruch 1 **dadurch gekennzeichnet, dass** die ebene Ausbildung aus mindestens zwei Positionen besteht:
- einer oberen, in der die Rahmen (6) nach oben aufgeklappt sind,
- einer anderen, unteren, in der die Rahmen (6) nach unten geklappt sind.

3. Umwandelbarer Sitz nach Anspruch 1 oder 2, die starren Elemente (11, 11'), die sich in einer waagerechten Ebene befinden, in parallelen Längsschienen (20, 20') geführt werden, was die Verschiebung des umwandelbaren Sitzes an den Schienen entlang ermöglicht, und dass mindestens eines des Gelenke (A12, A13), das sich in der waagerechten Ebene befindet, auf der Schiene (20, 20') verriegelbar ist.

4. Umwandelbarer Sitz nach einem der vorhergehenden Ansprüche, **dadurch gekennzeichnet, dass** die vierte Achse (15) Mittel umfasst, die es ermöglichen, den hinteren Teil der Sitzfläche (2) und den unteren Teil der Rückenlehne (3) an der Achse (15) lösbar einzuhängen.

5. Umwandelbarer Sitz nach einem der vorhergehenden Ansprüche, **dadurch gekennzeichnet, dass** das mindestens eine der Gelenke der verriegelbaren starren Elemente mit dem verriegelbaren Gelenk (A14) der Sitzfläche (2) zusammenfällt.

6. Umwandelbarer Sitz nach einem der vorhergehenden Ansprüche, **dadurch gekennzeichnet, dass** die Verriegelung/Entriegelung mindestens der Gelenke (A15, A19) des ersten (17) und zweiten (18) Endes der Arme (16) koordiniert sind.

7. Umwandelbarer Sitz nach Anspruch 6, **dadurch gekennzeichnet, dass** Mittel bereitgestellt werden, um die Bewegungen der Rückenlehne (3) und der Arme (16) voneinander abhängig zu machen.

8. Fahrzeug, umfassend mindestens einen Sitz (1) nach einem der Ansprüche 1 bis 7.

9. Verfahren zum Umwandeln eines umwandelbaren Sitzes (1) nach einem der Ansprüche 1 bis 7 in eine der sitzartigen, tischartigen, zusammengefalteten, ebenen Ausbildungen, **dadurch gekennzeichnet, dass** es die aufeinanderfolgenden Schritte des Entriegelns eines oder mehrerer der verriegelbaren Gelenke, des Neupositionierens der Sitzfläche (2) und/oder der Rückenlehne (3) und des Verriegelns des einen oder der mehreren verriegelbaren Gelenke umfasst.

10. Verfahren zum Umwandeln eines umwandelbaren Sitzes (1) nach einem der Ansprüche 1 bis 7 von einer sitzartigen Ausbildung in eine tischartige Ausbildung **gekennzeichnet durch** folgende Schritte:
- Entriegeln der Gelenke (A15, A19), die sich auf den vierten (15) und fünften (19) Achsen befinden,
- Verschwenken der Rückenlehne (3) bzw. der Arme (16) um die fünfte (19) bzw. vierte (15) Achse, und wenn der Rücken (21) der Rückenlehne (3) sich in der Waagerechten befindet,
- Verriegeln der Gelenke (A15, A19), die sich auf der vierten (15) und fünften (19) Achse befinden.

11. Verfahren zum Umwandeln eines umwandelbaren Sitzes (1) nach einem der Ansprüche 1 bis 7 von einer sitzartigen Ausbildung in eine ebene Ausbildung, **gekennzeichnet durch** folgende Schritte:
- Entriegeln der Gelenke (A14, A15, A19), die sich auf der dritten (14), vierten (15) und fünften (19) Achse befinden,
- Verschwenken der Sitzfläche (2) um die dritte Achse (14),
- Verschwenken der Rückenlehne (3) bzw. der Arme (16) um die fünfte (19) bzw. vierte (15) Achse, und wenn der Rücken (22) der Sitzfläche (2) und der Rücken (21) der Rückenlehne (3) sich in derselben waagerechten Ebene befinden,
- Verriegeln der Gelenke (A14, A15; A19), die sich auf der dritten (14), vierten (15) und fünften (19) Achse befinden.

12. Umwandlungsverfahren nach Anspruch 11 eines umwandelbaren Sitzes (1) von der ebenen Ausbildung in eine verstaute ebene Ausbildung, **gekennzeichnet durch** folgende Schritte:
- Entriegeln des mindestens einen der Gelenke (A12, A13, A14, A15) der starren Elemente,
- Klappen der Rahmen (6) nach unten, und wenn die untere Position erreicht ist,
- Verriegeln des mindestens einen der Gelenke (A12, A13, A14, A15) der starren Elemente.

13. Verfahren zum Umwandeln eines umwandelbaren Sitzes (1) nach einem der Ansprüche 1 bis 7, von einer sitzartigen Ausbildung in eine zusammengefaltete Ausbildung, **gekennzeichnet durch** folgende Schritte:
- Entriegeln der Gelenke (A14, A15), die sich auf den dritten (14) und vierten (15) Achsen befinden,
- Lösen der starren Elemente (8, 8') vor den im Wesentlichen waagerechten starren Elementen (11, 11'),
- Verschwenken der Sitzfläche (2), bis sie im Wesentlichen senkrecht und in der Nähe der Rückenlehne (3) ist,
- Verriegeln der Gelenke (A14, A15), die sich auf der dritten (14) und vierten (15) Achse befinden.

14. Verfahren zum Umwandeln eines umwandelbaren Sitzes (1) nach einem der Ansprüche 1 bis 7, **dadurch gekennzeichnet, dass** die Sitzfläche (2) bzw. die Rückenlehne (3) durch Entriegeln und dann Verriegeln des mindestens einen der Gelenke (A14, A19), die sich auf der dritten (14) und fünften (19) Achse befinden, in der Neigung verstellbar ist.

15. Verfahren zum Umwandeln eines umwandelbaren Sitzes (1) nach einem der Ansprüche 1 bis 7, **dadurch gekennzeichnet, dass** die Sitzfläche (2) durch Entriegeln und dann Verriegeln des mindestens einen der Gelenke der starren Elemente in der Höhe verstellbar ist.

16. Umwandelbarer Sitz nach einem der Ansprüche 1 bis 7, **dadurch gekennzeichnet, dass** er einen ersten Stab (30) umfasst, der im Wesentlichen in der Verlängerung des mindestens einen der starren Elemente (10, 10') liegt, die sich hinter dem Sitz befinden, wobei der Stab an seinem freien Ende ein erstes Zahnrad (31) umfasst, das angeordnet ist, um mit einem zweiten Zahnrad (32) zusammenzuwirken, das auf der fünften Achse (19) montiert ist, die mit der Rückenlehne (3) fest verbunden ist, wobei ein drittes Zahnrad (35) auf der dritten Achse (14) montiert ist, die mit der Sitzfläche (2) fest verbunden ist, und angeordnet ist, um mit einem vierten Zahnrad (36) zusammenzuwirken, das an dem Ende des entsprechenden starren Elements (8) montiert ist, das sich vor dem Sitz befindet, wobei ein zweiter Stab (33) an der Rückenlehne des Sitzes und an dem starren Element (9), das sich auf der entsprechenden Seite der Sitzfläche befindet, angelenkt ist, um ein verformbares Viereck zu bilden, das mit dem ersten Stab verformbar ist.
